# EUROPEAN PATENT APPLICATION

(11) **EP 4 851 670 A1**
(43) Date of publication of application: **09.12.2026**
(21) Application number: 26169757.7
(22) Date of filing: 31.03.2026
(51) Int. Cl.: G01S 13/91, G01S 7/41, G01S 13/42, G01S 13/87, G01S 13/933, G01S 13/935, G08G 5/54, G08G 5/55, G08G 5/57, G08G 5/90

(54) **RADAR BASED VEHICLE NAVIGATION**

(30) Priority: 02.06.2025 US 202519225542
(71) Applicant: The Boeing Company, Arlington, VA 22202 (US)
(72) Inventor: LI, Rongsheng, Arlington, 22202 (US); TOLSTOV, Andrey, Arlington, 22202 (US); HARRIS, Caleb Matthew, Arlington, 22202 (US); GRUEBELE, Cody Lucas, Arlington, 22202 (US); SHAPOURY, Alireza, Arlington, 22202 (US); STINE, Matthew R., Arlington, 22202 (US); LOVEGREN, Jonathan A., Arlington, 22202 (US)
(74) Representative: Boult Wade Tennant LLP

(57) **Abstract**

In some examples, a radar system of a vehicle may measure a range and a direction for at least one reflector of a set of reflectors positioned at respective locations associated with a target area. A navigation system of the vehicle may determine a position of the vehicle based on the range and the direction for the at least one reflector.

## Description

### FIELD

The present disclosure relates generally to radar-based vehicle navigation and to radar-based determination of a position of a vehicle, such as an aircraft.

### BACKGROUND

Advanced air mobility (AAM) is an emerging system of air transportation that supports the use of aircraft, such as vertical take-off and landing (VTOL) aircraft, remotely piloted aircraft, autonomous aircraft, and/or unmanned or uncrewed aerial vehicles (UAVs), among other examples, to transport people or cargo between locations not typically served by traditional aviation modes. AAM use cases include urban air mobility (UAM), regional air mobility (RAM), cargo delivery, public services, and private or recreational vehicles. UAM involves air transportation of passengers or cargo in an urban area. RAM involves air transportation connecting rural or hard-to-reach areas.

### SUMMARY

There is described herein a system, comprising: one or more reflectors positioned at respective locations associated with a target area; a radar system of a vehicle, the radar system configured to measure a range and a direction for at least one reflector of the one or more reflectors; and a navigation system of the vehicle, the navigation system configured to determine a position of the vehicle based on the range and the direction for the at least one reflector.

There is described herein a method, comprising: measuring, by a radar system of a vehicle, a range and a direction for at least one reflector of a set of reflectors positioned at respective locations associated with a target area; and determining, by a navigation system of the vehicle, a position of the vehicle based on the range and the direction for the at least one reflector.

There is described herein a vehicle, comprising: a radar system configured to measure a range and a direction for at least one reflector of a set of reflectors positioned at respective locations associated with a target area; and a navigation system configured to determine a position of the vehicle based on the range and the direction for the at least one reflector.

The features, functions, and advantages described herein can be achieved independently in various examples or can be combined in other examples, further details of which are shown in the drawings and described below.

### BRIEF DESCRIPTION OF THE DRAWINGS

Figs. 1A-1G are diagrams of an example implementation associated with radar-based vehicle navigation.
Fig. 2 is a diagram of an example environment in which systems and/or methods described herein may be implemented.
Fig. 3 is a diagram of example components of a device associated with radar-based vehicle navigation.
Fig. 4 is a flowchart of an example process associated with radar-based vehicle navigation.

### DETAILED DESCRIPTION

The following detailed description of examples refers to the accompanying drawings. The same reference numbers in different drawings identify the same or similar elements.

Advanced air mobility (AAM), such as urban air mobility (UAM), may involve a highly complex aircraft traffic environment. In such an aircraft traffic environment, automated (e.g., instrument-based) landing may be used for landing an aircraft, such as a vertical take-off and landing (VTOL) aircraft, an autonomous aircraft, an unmanned or uncrewed aerial vehicle (UAV), or a remotely piloted aircraft, among other examples, at a vertiport or airport. Accurate real-time position tracking of an aircraft is import for precise and safe automated landing of the aircraft. Examples of landing systems used for automated landing of aircrafts include an instrument landing system (ILS) and global positioning system (GPS)-based landing systems. In GPS-based landing systems, GPS-based position tracking of the aircraft is augmented using a space-based augmentation system (SBAS) (e.g., a wide area augmentation system (WAAS)) or a ground-based augmentation system (GBAS). However, the use of a GPS/SBAS or GPS/GBAS has not been approved for Category 3 landing (e.g., instrument-based/automated landing all the way to the ground). Additionally, SBASs and GBASs are expensive, and therefore may not be practical for vertiports in a UAM environment.

Some examples described herein enable radar-based position determination and navigation for a vehicle, such as an aircraft. One or more reflectors are positioned at respective locations associated with a target area. For example, the reflectors may be passive reflectors or active transponders. A radar system of the vehicle measures a range and a direction for at least one reflector of the one or more reflectors, and a navigation system of the vehicle determines a position of the vehicle based on the range and the direction for the at least one reflector. In some examples, the vehicle is an aircraft and the target area is landing zone. In this case, the navigation system may control the vehicle, based on the determined position of the vehicle, to land in the landing zone. By using the radar-based position determination described herein, the navigation system of the vehicle is enabled to determine the position of the vehicle (e.g., aircraft) with high accuracy/integrity and with high availability. In this way, the navigation system of an aircraft is enabled to land the aircraft with high precision and safety. Furthermore, the radar-based position determination and navigation may be less expensive, and therefore more practical, to implement at vertiports or airports, as compared with existing systems (e.g., GBASs) for GPS-based landing.

In some examples, a radar system of an aircraft designated for another purpose, such as a detect and avoid (DAA) radar, may also be used as the radar system for the radar-based navigation described herein.

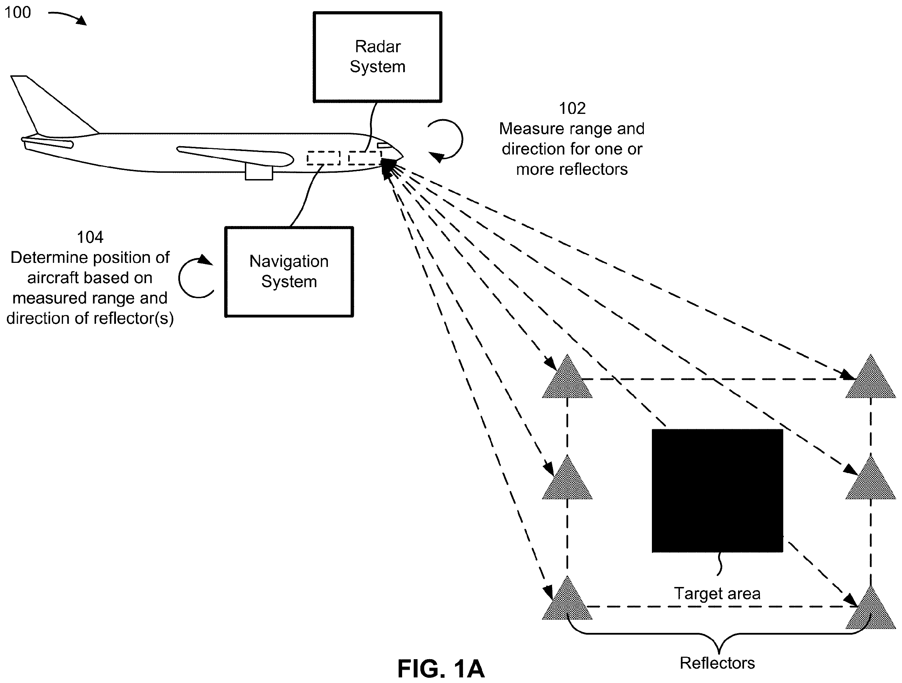

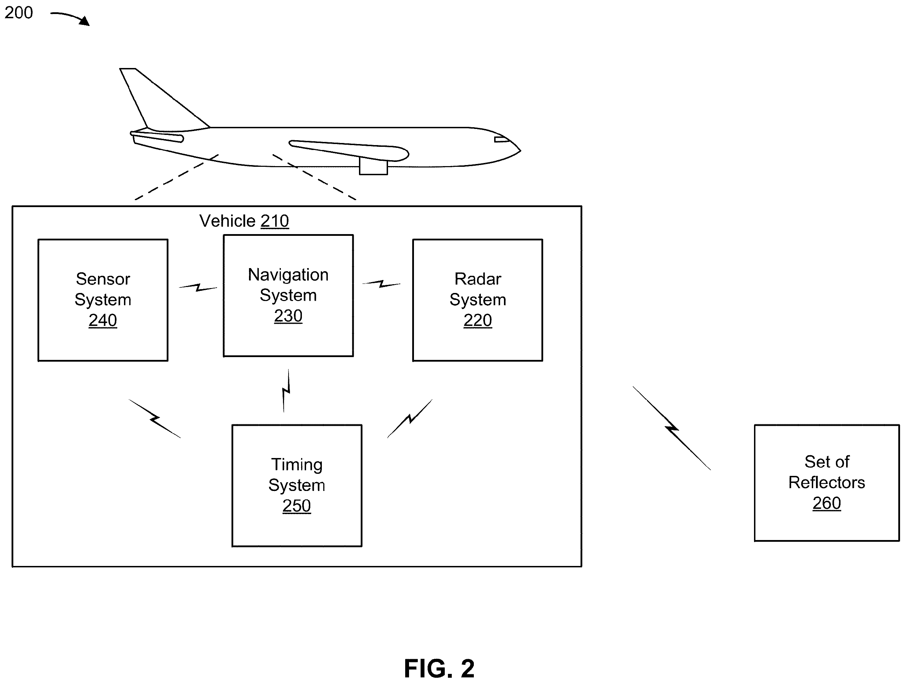

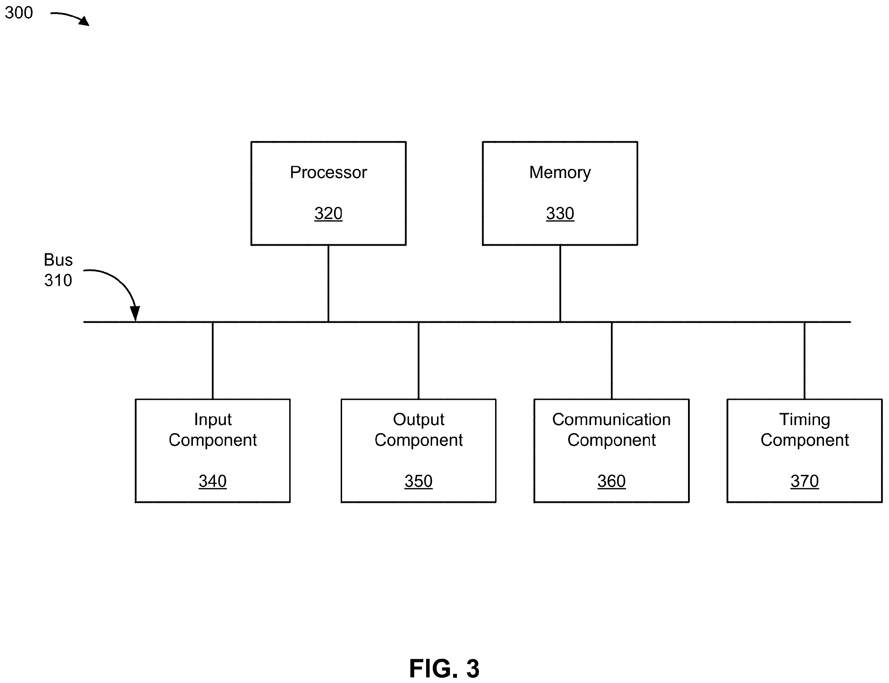

Figs. 1A-1G are diagrams of an example 100 associated with radar-based vehicle navigation. As shown in Figs. 1A-1G, example 100 includes a vehicle, a radar system of the vehicle, a navigation system of the vehicle, and a set of reflectors associated with a target area. These devices are described in more detail below in connection with Fig. 2 and Fig. 3.

As shown in Figs. 1A-1G, in example 100, the vehicle is an aircraft, and the target area is a landing zone for the aircraft. In some other examples, the operations described in connection with Figs. 1A-1G may be similarly performed for another type of vehicle, and the target area may be another target area (e.g., a target destination) associated with the other type of vehicle. As shown in Figs. 1A-1G, a system for radar-based aircraft navigation uses a combination of onboard radar (e.g., the radar system of the aircraft) and the set of reflectors positioned at respective locations associated with the target area (e.g., the landing zone) to determine a position of the aircraft. In some examples, the radar-based navigation is used for navigation/positioning of the aircraft during precision landing of the aircraft. Additionally, or alternatively, the radar-based navigation may be used for navigation/positioning of the aircraft when the aircraft is in en-route operation (e.g., after take-off and prior to beginning landing), for example when GPS is denied or otherwise unavailable to the aircraft.

The set of reflectors includes one or more reflectors. In some examples, the set of reflectors includes multiple reflectors arranged in a pattern around the landing zone. For example, the set of reflectors shown in Fig. 1A includes six reflectors arranged at respective locations around the landing zone. In other examples, the set of reflectors may include more or fewer reflectors than the set of reflectors shown in Fig. 1A. For example, the set of reflectors may include only a single reflector to provide positioning/navigation measurements when the aircraft has separate precision attitude, heading, and radar antenna alignment information. Alternatively, the set of reflectors may include three, four, or more reflectors to provide independent position measurements and attitude information with high integrity and high availability for safety critical landing. The reflectors are arranged at precisely surveyed locations with respect to the landing zone. In some examples, the landing zone (e.g., the target area) is on the ground, such as at a vertiport or an airport. In this case, the reflectors are arranged at precisely surveyed locations on the ground. In some examples, the landing zone (e.g., the target area) is on another vehicle (e.g., an aircraft carrier) larger than the aircraft or on a landing platform (e.g., on an oil rig). In this case, the reflectors are arranged on the other vehicle (e.g., the aircraft carrier), or on or near the landing platform (e.g., on the oil rig), at precisely surveyed locations with respect to the landing zone.

In some examples, the reflectors, of the set of reflectors, are passive reflectors (e.g., passive corner reflectors). In some examples, the reflectors, of the set of reflectors, are active transponders. In some examples, the set of reflectors includes a combination of passive reflectors and active transponders.

In some examples, the radar system is an onboard radar system dedicated for navigation purposes (e.g., dedicated for the radar-based navigation described in connection with Figs. 1A-1G). In some examples, the radar system is an onboard radar system that is shared for the radar-based navigation and one or more other functions, such as DAA. That is, the radar system may be a DAA radar system that is used for both DAA functions and the radar-based navigation described in connection with Figs. 1A-1G. In this case, the radar system may operate in different modes (e.g., a DAA mode and a radar-based navigation mode) in a time-shared fashion, or the radar system may operate in an all-inclusive mode to perform both ground and air object detections and measurements simultaneously.

As shown in Fig. 1A, and by reference number 102, the radar system measures a range and a direction (e.g., line of sight (LOS) angle) for each of one or more reflectors of the set of reflectors. The radar system includes a radar antenna that transmits radar signals and receives reflected radar signals that are reflected by the one or more reflectors. The radar system measures the range and the direction for each of the one or more reflectors based on the reflected radar signals. The range is a distance between the reflector and the radar antenna. The direction includes an azimuth angle and an elevation angle between the reflector and the radar antenna. In some examples, the radar system measures a range and a direction for each reflector, of the set of reflectors, that is in the radar antenna frame (e.g., a field of view (FOV) of the radar antenna). In some examples, the radar antenna may have a lateral FOV of at least 120 degrees (e.g., at least ± 60 degrees) and a vertical FOV of at least 106 degrees (e.g., ± 53 degrees). The radar system repeatedly (e.g., continuously or periodically) transmits radar signals and measures the ranges and directions for the reflectors in the FOV of the radar antenna. In some examples, in addition to the ranges and directions for the reflectors, the radar system may also measure the range rate (e.g., the change in range over time) and Doppler shift for each reflector (e.g., each reflector in the FOV of the radar antenna. In some examples, the range rate measurements and the Doppler measurements may be used (e.g., by the navigation system) to derive velocity information for the aircraft and/or for ground clutter mitigation (e.g., to differentiate the reflectors from ground clutter).

In some examples, the set of reflectors includes one or more passive reflectors (e.g., passive corner reflectors). For example, all or a subset of the set of reflectors may be passive reflectors. A passive reflector (e.g., a passive reflector in the radar antenna frame) reflects a radar signal (e.g., a radar signal transmitted by the radar system) that is incident on the passive reflector, resulting in a reflected radar signal. The radar system receives the reflected radar signal and determines the range and the direction (e.g., the azimuth angle and the elevation angle) for the passive reflector based on the reflected radar signal.

In some examples, the set of reflectors includes one or more active transponders. For example, all or a subset of the set of reflectors may be active transponders. In some examples, the active transponders add respective unique (e.g., with respect to the other active transponders in the set of reflectors) signatures into the reflected radar signals transmitted by the active transponders. That is, each active transponder (e.g., each active transponder in the radar antenna frame) receives a radar signal transmitted by the radar system and transmits a reflected radar signal with a respective signature associated with that transponder. The signature associated with an active transponder may be an adjustment or modulation applied to the reflected radar signal transmitted by that active transponder. In this way, the reflected radar signals transmitted by the active transponders are uniquely coded to enable the radar system to identify the active transponders that transmitted the reflect radar signals. In some examples, the signature applied to the reflected radar signal by an active transponder may be a frequency shift. For example, the active transponder, in connection with receiving a radar signal, may transmit two reflected radar signals that are shifted by ± a delta frequency value (e.g., shifted by a Doppler shift value ± the delta frequency value) from a frequency of the radar signal. In this case, the delta frequency value is associated with the active transponder (e.g., each active transponder is associated with a different delta frequency value from the other active transponders). Additionally, or alternatively, in some examples, the signature may be applied by an active transponder by modulation of the magnitude of the reflected radar signal, modulation of the phase of the reflected radar signal, or a combination thereof. Additionally, or alternatively, the signature may be applied by polarization of the reflected signals, predetermined radar cross section (RCS) differences between the reflectors (e.g., transponders), and/or different directivity/directions of maximum reflection (e.g., look-angle uniqueness) for the reflectors (e.g., transponders), among other examples. The radar system receives the reflected radar signals transmitted by the active transponders, identifies the active transponders that transmitted the reflected radar signals based on the respective signatures applied to the reflected radar signals, and determines the ranges and the directions (e.g., the azimuth angle and the elevation angle) for the active transponders based on the reflected radar signals.

As further shown in Fig. 1A, and by reference number 104, the navigation system determines a position of the aircraft based on the measured range and direction for the one or more reflectors. The radar system may send the range and direction measurements for the one or more reflectors to the navigation system, or the radar system may store the range and direction measurements for the one or more reflectors in a memory accessible to the navigation system. The navigation system receives (e.g., from the radar system) or retrieves (e.g., from the memory) the range and direction measurements for the one or more reflectors and determines the position of the aircraft based on the range and direction measurements. In some examples, the navigation system determines an absolute position of the aircraft. The absolute position of the aircraft may be a set of WGS84 coordinates (e.g., latitude, longitude, and altitude) for the aircraft. The navigation system may determine the absolute position of the aircraft based on the measured range and direction for the one or more reflectors in a case in which the reflectors are surveyed with absolute position knowledge (such as WGS84 coordinates). For example, the navigation system may determine the absolute position in a case in which the reflectors are arranged in a pattern at or near a stationary landing zone, such as a vertiport or an airport. In some examples, the navigation system determines a relative position of the aircraft with respect to a reference point, such as the center of the landing zone (e.g., the target area). In this case, the landing zone may be at a vertiport or airport, on another vehicle (e.g., an aircraft carrier), or on a landing platform (e.g., on an oil rig).

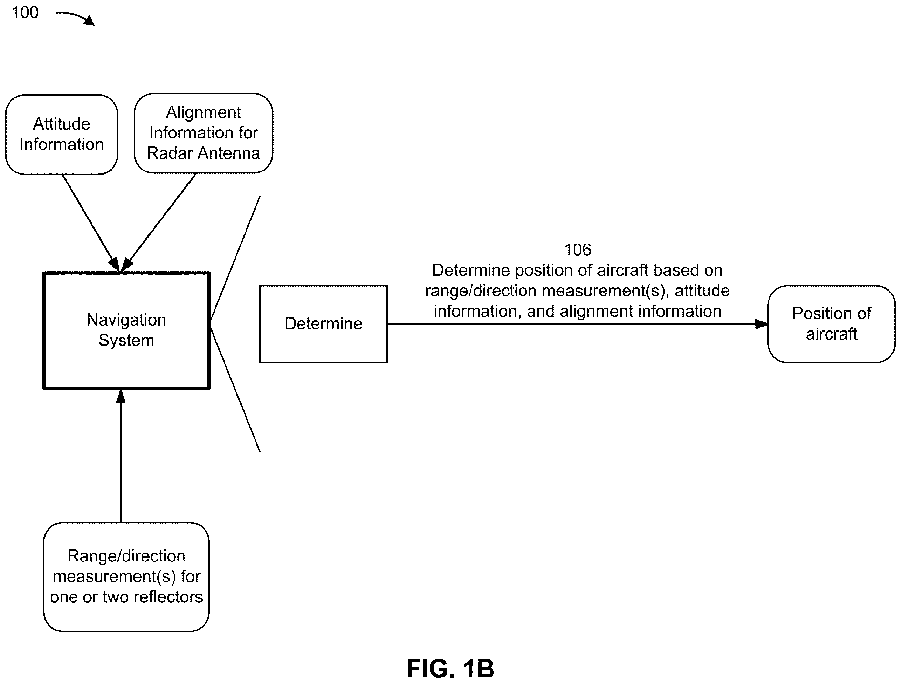

As shown in Fig. 1B, and by reference number 106, in a scenario in which the radar system measures the range and direction for only one reflector or two reflectors, the navigation system determines the position of the aircraft based on the range and direction measurement(s), attitude information associated with the aircraft, and alignment information for the radar antenna (also referred to herein as "antenna alignment information"). The navigation system receives/inputs the range and direction measurement(s) for the reflector(s) The attitude information includes a roll and a pitch of the aircraft. The attitude information may also include a heading of the aircraft. The attitude information used, together with the range and detection measurement(s) for one reflector or two reflectors, to determine the position of the aircraft is associated with an independent attitude/heading source from the radar measurements (e.g., the attitude information is not calculated/determined based on the radar measurements of the reflector(s)). For example, the navigation system may receive or input the attitude information from another navigation system (e.g., a separate inertial navigation system) of the aircraft, or the navigation system may receive measurements (e.g., inertial measurements) from inertial sensors and/or other navigation sensors and determine the attitude information based on the measurements received from the inertial sensors and/or other navigation sensors. The antenna alignment information is indicative of the alignment/position of the radar antenna relative to the body of the aircraft. The navigation system may input/retrieve the antenna alignment information from a memory of the navigation system.

In a case in which a range and direction measurement is acquired by the radar system for only a single reflector (e.g., there is only one reflector in the set of reflectors or only one reflector in the FOV of the radar antenna), the navigation system determines the position of the aircraft based on the range and direction measurement (e.g., range, azimuth angle, and elevation angle) for the single reflector, full attitude information, and the antenna alignment information. The full attitude information includes the roll, the pitch, and the heading of the aircraft. A relative distance vector in a sensor frame (*^{S}D*), which provides the position of a radar sensor (e.g., the radar antenna) relative to a reflector, is determined based on the one dimensional (1-D) range (*R*), the elevation angle (*θₑₗ*), and the azimuth angle (*θ_{az}*) as: $D S = \left[\begin{matrix}R cos {θ}_{el} cos {θ}_{az} \\ R cos {θ}_{el} sin {θ}_{az} \\ R sin {θ}_{el}\end{matrix}\right] .$

In the case in which a range and direction measurement is acquired by the radar system for only a single reflector, the position of the aircraft, in a navigation frame, with respect to the single reflector is determined as: $D N = {C}_{B}^{N} {C}_{A}^{B} \left[\begin{matrix}{R}^{˜} cos \left({{θ}^{˜}}_{el}\right) cos \left({{θ}^{˜}}_{az}\right) \\ {R}^{˜} cos \left({{θ}^{˜}}_{el}\right) sin \left({{θ}^{˜}}_{az}\right) \\ {R}^{˜} sin \left({{θ}^{˜}}_{el}\right)\end{matrix}\right] ,$ where *^{N}D* denotes the position of the aircraft relative to the reflector in the navigation frame, ${C}_{A}^{B}$ denotes a direction cosine matrix (DCM), formed based on the antenna alignment information (e.g., antenna alignment angles), for transforming a vector from the antenna frame (e.g., the sensor frame) to a body frame, ${C}_{B}^{N}$ denotes a DCM, formed based on the aircraft attitude information (roll, pitch, and heading), for transforming a vector from the body frame to the navigation frame, *R̃* denotes the range measurement measured by the radar system, *θ̃ₑₗ* denotes the elevation angle measurement measured by the radar system, and *θ̃_{az}* denotes the azimuth angle measurement measured by the radar system.

In a case in which range and direction measurements are acquired by the radar system for only two reflectors (e.g., there are only two reflectors in the set of reflectors or only two reflectors in the FOV of the radar antenna), the navigation system determines the position of the aircraft based on the range and direction measurements (e.g., range, azimuth angle, and elevation angle) for the two reflectors, at least partial attitude information, and the antenna alignment information. The partial attitude information may include just the roll and the pitch of the aircraft (e.g., without the heading). In the case in which there are range and direction measurements for two reflectors, the navigation system may use the full attitude information (e.g., roll, pitch, and heading) or the partial attitude information (e.g., roll and pitch), along with the range and direction measurements and the antenna alignment information, to determine the position of the aircraft. In this case, the two reflectors and the position of the plane form a triangle, with one side of the triangle fully defined (e.g., the location of the two reflectors and the line connecting the two reflectors). The relative separation angle between the two remaining undefined sides of the triangle is also known to the navigation system (e.g., the relative heading is known, even though the absolute heading may be unknown). Accordingly, the location of the third point of the triangle (e.g., the position of the aircraft) can only have two solutions, and the navigation system determines which of the two solutions is correct based on the partial attitude information (or the full attitude information) and the antenna alignment information.

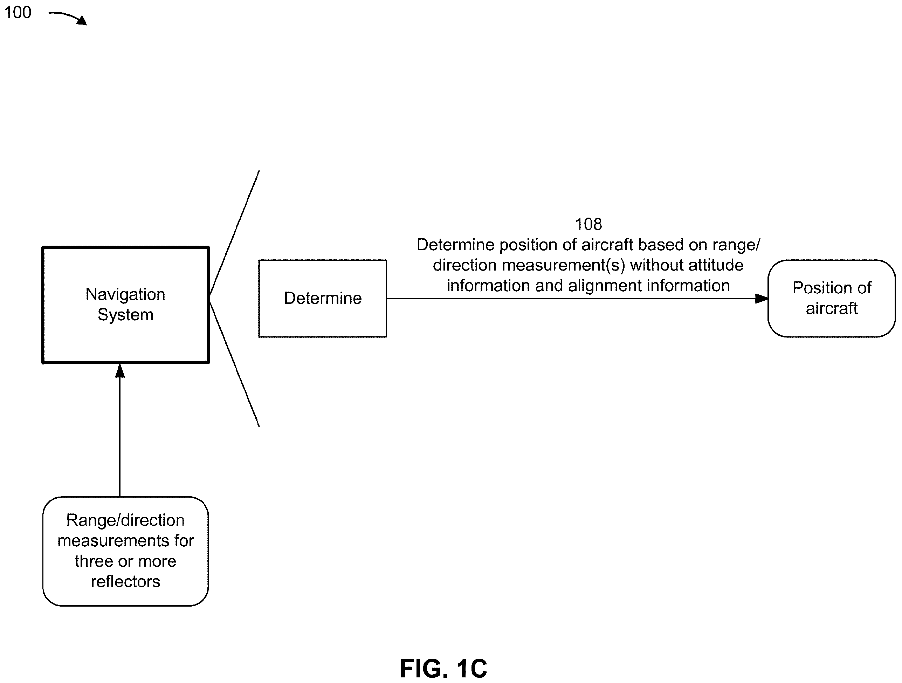

As shown in Fig. 1C, and by reference number 108, in a scenario in which the radar system measures the range and direction for three or more reflectors, the navigation system determines the position of the aircraft based on the range and direction measurements, without attitude information associated with the aircraft and alignment information for the radar antenna. The range measurements for three reflectors enable the navigation system to calculate the three-dimensional (3D) position of the aircraft without any independent attitude/heading knowledge. Three range measurements and four relative angles enable the navigation unit to determine the 3D position of the aircraft and the 3D attitude of the aircraft. In the case in which there are range and direction measurements (e.g., range, azimuth angle, and elevation angle) for three or more reflectors, ignoring the existence of body frame, and thus an antenna-to-body transformation, the determination of the position of the aircraft can instead use the sensor frame (*S*) (e.g., radar sensor frame) as a reference and earth-centered earth-fixed (ECEF) (*E*) as the navigation frame (or local level frame). In this case, the distance vector between the aircraft and the *j^{th}* reflector in the Earth frame, *^{E}*(*Dⱼ*), is defined as: $\left({D}_{j}\right) E = \left(P j E-P E\right) ,$ where *^{E}Pⱼ* denotes the position of the *j^{th}* reflector in the Earth frame and *^{E}P* denotes the position of the aircraft in the Earth frame. This vector is transformed into the sensor frame as: $\left({D}_{j}\right) S = {C}_{E}^{S} \left({D}_{j}\right) E ,$ where *^{S}*(*Dⱼ*)denotes the distance vector between the aircraft and the *j^{th}* reflector in the sensor frame, and ${C}_{E}^{S}$ denotes a DCM for transforming a vector from the Earth frame to the sensor frame. This equation can be linearized by observing small changes (*δ*) in the variables, where *^{E}Pⱼ* is a constant, as follows: $δ \left({D}_{j}\right) S = {δC}_{E}^{S} \left({D}_{j}\right) E + {C}_{E}^{S} \left(δ\left(P j E-P E\right)\right) = {δC}_{E}^{S} \left({D}_{j}\right) E + {C}_{E}^{S} \left(-δP E\right) .$

By taking advantage of properties of rotation matrices and using linear algebra, this equation can be expressed with sensitivity to the angle errors of the ${C}_{E}^{S}$ transformation. Moreover, the sensitivity to the error in prior estimates of the relative distance vector and aircraft position can be defined, with the equation linearized about the prior initial estimates, as: $δ \left({D}_{j}\right) S = \left[\left(\hat{D} j S\right)\times \right] {δθ}_{E}^{S} - {\hat{C}}_{E}^{S} δ P E ,$ where *^{S}D̂ⱼ* denotes the estimated distance vector of the *j^{th}* reflector in the sensor frame, ${\hat{C}}_{E}^{S}$ denotes the estimated transformation from the Earth frame to the sensor frame, ${δθ}_{E}^{S}$ denotes the error in Earth frame to sensor frame angles, *δ^{E}P* denotes the error of the position of the aircraft in the Earth frame, and [*V* ×] denotes the skew symmetric matrix form of a vector, $V = \left[\begin{matrix}{v}_{1} \\ {v}_{2} \\ {v}_{3}\end{matrix}\right]$, e.g., [*V* ×] *= Skew*(*V*) = $\left[\begin{matrix}0 & - {v}_{3} & {v}_{2} \\ {v}_{3} & 0 & - {v}_{1} \\ - {v}_{2} & {v}_{1} & 0\end{matrix}\right]$. In state-space form, the previous equation can be expressed as: $δ \left({D}_{j}\right) S = \left[\left[\left(\hat{D} j S\right)\times \right]-{\hat{C}}_{E}^{S}\right] \left[\begin{matrix}{δθ}_{E}^{S} \\ {δ}^{E} P\end{matrix}\right] .$

Given that there are three, or more, reflectors, the equations of the reflectors can be stacked into a single set of equations and solved using least squares. This allows the performance and geometric Dilution of Precision (DoP) of the solution for the linearized equations to be analyzed. The measured distance vector from the sensor (e.g., the radar system), in the sensor frame, can defined as *^{S}D̃*. The distance vector, in the sensor frame, is defined based on the range measurement (*R̃*), elevation angle measurement (*θ̃ₑₗ*), and azimuth angle measurement (*θ̃_{az}*), as: ${D}^{˜} S = \left[\begin{matrix}{R}^{˜} cos \left({{θ}^{˜}}_{el}\right) cos \left({{θ}^{˜}}_{az}\right) \\ {R}^{˜} cos \left({{θ}^{˜}}_{el}\right) sin \left({{θ}^{˜}}_{az}\right) \\ {R}^{˜} sin \left({{θ}^{˜}}_{el}\right)\end{matrix}\right] .$

The linearized measurement equation of the distance vector in the sensor frame gives an estimate of the error when assuming the error for range, elevation, and azimuth are Gaussian noise and the linearization holds the small angle approximation, as shown as: ${D}^{˜} S = \left[\begin{matrix}{R}^{˜} cos \left({{θ}^{˜}}_{el}\right) cos \left({{θ}^{˜}}_{az}\right) \\ {R}^{˜} cos \left({{θ}^{˜}}_{el}\right) sin \left({{θ}^{˜}}_{az}\right) \\ {R}^{˜} sin \left({{θ}^{˜}}_{el}\right)\end{matrix}\right] = \left[\begin{matrix}R cos \left({θ}_{el}\right) cos \left({θ}_{az}\right) \\ R cos \left({θ}_{el}\right) sin \left({θ}_{az}\right) \\ R sin \left({θ}_{el}\right)\end{matrix}\right] + \left[\begin{matrix}{v}_{R} cos \left({θ}_{el}\right) cos \left({θ}_{az}\right) \\ R cos \left({θ}_{el}\right) cos \left({θ}_{az}\right) {v}_{az} \\ R cos \left({θ}_{el}\right) {v}_{az}\end{matrix}\right] .$

Gaussian random variables may be used for distance (*v_{R}*) azimuth (*vₑₗ*), and elevation (*v_{az}*).

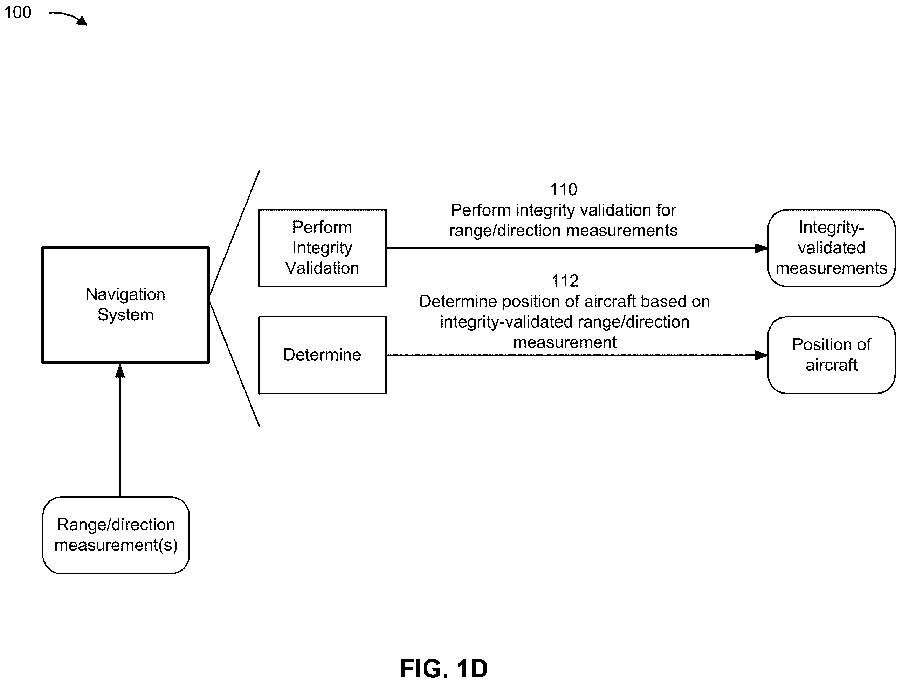

In some examples, the navigation system (or the radar system) may perform integrity monitoring and validation for the range and direction measurements for the reflectors and/or for the position of the aircraft determined based on the range and direction measurements. As shown in Fig. 1D, and by reference number 110, the navigation system performs integrity validation for the range and direction measurements for the one or more reflectors. In some examples, the navigation system validates the integrity of the range and direction measurements based on the frequency, phase, and/or amplitude of the reflected radar signals received from the one or more reflectors by the radar system. For example, in a case in which the reflectors are active transponders, each reflector may transmit two reflected radar signals including a first reflected radar signal with a frequency shifted from the frequency of the radar signal transmitted by the radar system by +Δ*_{f}* and a second reflected radar signal with a frequency shifted from the frequency of the radar signal transmitted by the radar system by -Δ*_{f}*, where Δ*_{f}* is a frequency shift value associated with that reflector. In this case, the navigation system may determine whether the first and second reflected radar signals received from a reflector are shifted positively and negatively, respectively, by the frequency shift value (Δ*_{f}*). If the same frequency shift value is applied to the first and second reflected radar signals received from a reflector, the range and direction measurement for the reflector pass this integrity validation. If different frequency shift values are applied to the first and second reflected radar signals received from a reflector, the range and direction measurement for the reflector fails the integrity validation, and the navigation system will not use the range and direction measurement for position determination. Additionally, or alternatively, the navigation system may check whether the first and second reflected radar signals received from a reflector have the same phase and the same amplitude. If the first and second reflected radar signals received from the reflector have the same phase and the same amplitude, the range and direction measurement for the reflector passes this integrity validation. If the first and second reflected radar signals received from the reflector have different phases or different amplitudes, the range and direction measurement for the reflector fails the integrity validation, and the navigation system will not use the range and direction measurement for position determination.

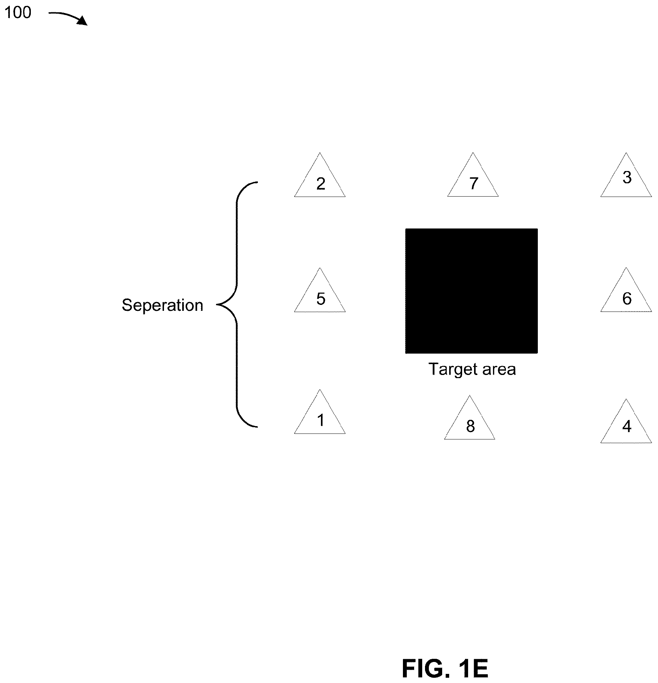

In some examples, the navigation system performs integrity validation for the range and direction measurements for the one or more reflectors based on the geometry of the reflectors in the set of reflectors. In some examples, the set of reflectors includes multiple reflectors arranged in a pattern with respect to the landing zone (e.g., the target area), and the radar system measures the range and direction for multiple reflectors in the set of reflectors. In this case, the navigation system may determine whether the range and direction measurements for the reflectors correspond to the geometry of the pattern of the set of reflectors. For example, the navigation system may determine relative locations of the reflectors based on the range and direction measurements for the reflectors. If the relative locations of the reflectors do not correspond to the geometry of the pattern of reflectors (e.g., the relative location for at least one reflector is not within a threshold distance of an expected reflector location in the pattern based on the relative locations of the other reflectors), the navigation system may determine that the range and direction measurement(s) for any reflector(s) that are outliers from the expected pattern do not pass this integrity validation. An example of a pattern of reflectors with six reflectors is shown Fig. 1A. Fig. 1E shows another example of a pattern of reflectors that includes eight reflectors (reflector 1 through reflector 8) surrounding a target area (e.g., a landing zone). The reflectors (reflector 1- reflector 8) are shown as triangles in Fig. 1E. In some examples, including the example of Fig. 1E, the reflectors are active transponders that transmit the reflected radar signals with respective signatures associated with the reflectors, such that the radar system is enabled to identify the reflectors based on the reflected radar signals received from the reflectors. In this case, the navigation system may determine, based on the range and direction measurement for each reflector, whether that reflector is within a threshold of an expected location in the pattern, relative to the locations of the other reflectors. For example, the navigation system may determine whether a calculated separation between reflector 1 and reflector 2 based on the range and direction measurements for reflector 1 and reflector 2 is within a threshold of an actual separation between reflector 1 and reflector 2 in accordance with the geometry of the pattern of reflectors. In some examples, the distance between reflector 1 and reflector 2 (e.g., between the end reflectors on each side of the target area) may be 60 meters. If a reflector is not determined, based on the range and direction measurement for the reflector, to be within the threshold of the expected location for the reflector in the pattern relative to the locations of the reflectors, the navigation system may determine that the range and direction measurement for the reflector fails this integrity validation.

In some examples, the navigation system may perform the integrity validation based on the frequencies, phases, and/or amplitudes of the reflected radar signals, the integrity validation based on the geometry of the pattern of reflectors, or a combination thereof. Although, as shown in Fig. 1D, the navigation system performs the integrity validation, in some other examples, the radar system may perform all or a subset of the integrity validation operations described for the navigation system in connection with Fig. 1D.

As further shown in Fig. 1D, and by reference number 112, the navigation system determines the position of the aircraft based on the integrity-validated range and direction measurements for the one or more reflectors. The navigation system determines the position based on the integrity-validated range and direction measurements for the one or more reflectors as described above in connection with reference numbers 104, 106, and 108.

As shown in Fig. 1D, the navigation system performs the integrity validation for the range and direction measurements for the reflectors to monitor the integrity (e.g., the accuracy and/or the consistency) of the range and direction measurements before using the range and direction measurements to determine the position of the aircraft. In some other examples, the navigation system may perform some or all of the integrity validation operations described in connection with reference number 110 after determining the position of the aircraft (e.g., in order to validate the integrity of the determined position and evaluate whether to use the determined position for navigation). In some examples, in a case in which the radar system measures ranges and directions for four or more reflectors, the navigation system may leverage redundancy of the measurements to perform integrity validation for the determined position of the aircraft. For example, the navigation system may determine a first solution for the position of the aircraft based on a first subset of three or more reflectors and a second solution for the position of the aircraft based on a second subset of three or more reflectors with at least one different reflector from the first subset. The navigation system may compare the first solution and the second solution to determine whether the first solution is within a threshold of the second solution. If the first solution is within the threshold of the second solution, the determined position of the aircraft (e.g., the first solution) passes the integrity validation. If the first solution is not within the threshold of the second solution, the determined position of the aircraft fails the integrity validation and the navigation system will not use the determined position for navigation of the aircraft.

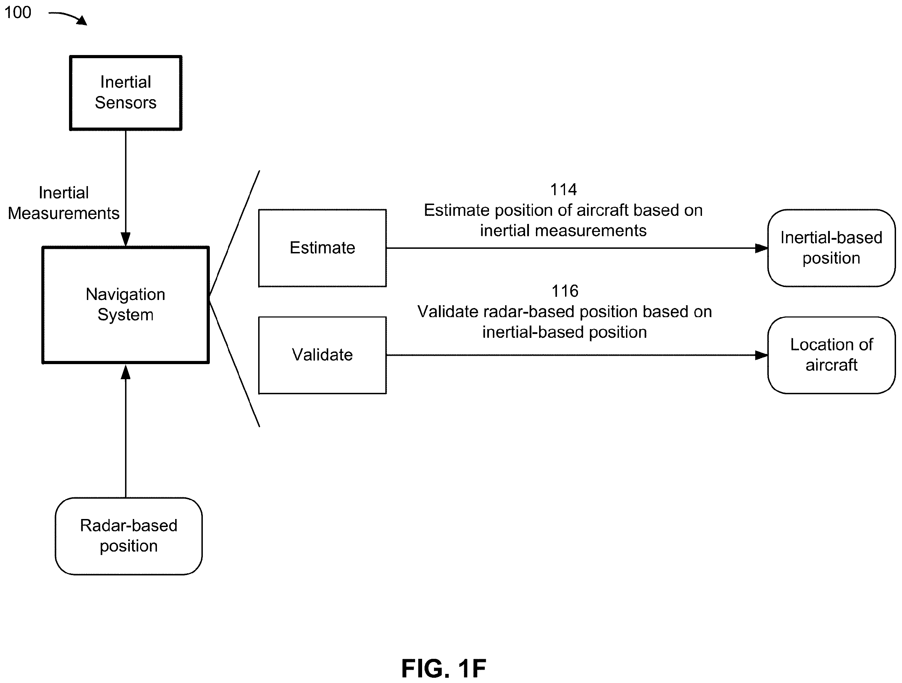

As shown in Fig. 1F, and by reference number 114, the navigation system estimates a position of the aircraft based on inertial measurements of the aircraft. The navigation system receives the inertial measurements from one or more inertial sensors of the aircraft. The navigation system may also receive other measurements from one or more other navigation sensors of the aircraft, and the navigation system may estimate the position of the aircraft based on the inertial measurements and the other measurements. The inertial sensors and/or the other navigation sensors are included in a sensor system of the aircraft, which is described in greater detail below in connection with Fig. 2. The estimate of the position of the aircraft based on the inertial measurements (and possibly other measurements) is referred to herein as the "inertial-based position." The navigation system may determine attitude information (e.g., roll, pitch, and heading) based on the inertial measurements, and the navigation system may estimate the inertial-based position based on the attitude information and a previous determined or estimated position of the aircraft.

The position of the aircraft determined by the navigation system based on the range and direction measurements of the one or more reflectors is referred to herein as the "radar-based position." As further shown in Fig. 1F, and by reference number 116, the navigation system validates the radar-based position based on the inertial-based position. In some examples, the navigation system compares the radar-based position with the inertial-based position to determine whether a difference between the radar-based position and the inertial-based position satisfies (e.g., is less than) a threshold. If the difference between the radar-based position and the inertial-based position satisfies the threshold, the radar-based position is validated and the navigation system proceeds to navigate the aircraft based on the radar-based position. In this case, the navigation system may also integrate the radar-based position with the inertial-based position, for example, by using the radar-based position as a current position for estimating a next inertial-based position. If the difference between the radar-based position and the inertial-based position does not satisfy the threshold, the radar-based position is not validated (e.g., the radar-based position fails the validation), and the navigation system does not use the radar-based position to navigate. In this case, the navigation system may determine a next radar-based position of the aircraft based on new range and direction measurements, acquired by the radar system, for one or more reflectors, and the navigation system may rely on the inertial-based position estimate (or another redundant aircraft position determination) to navigate the aircraft until the next radar-based position is determined and validated. This validation based on the inertial-based position estimate provides further integrity monitoring for the radar-based position determination.

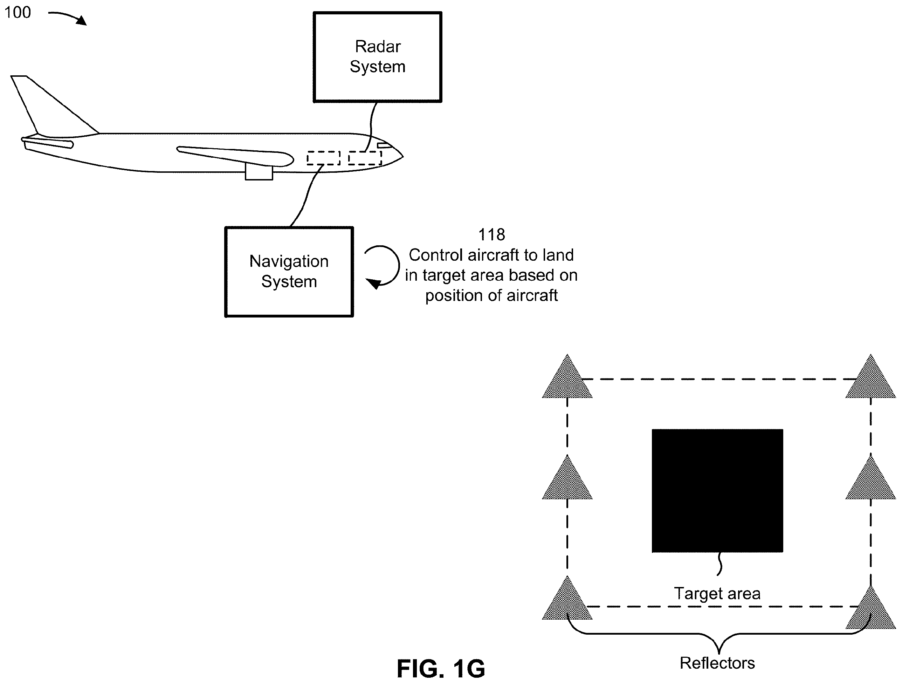

As shown in Fig. 1G, and by reference number 118, the navigation system controls the aircraft to land in the target area (e.g., the landing zone) based on the position of the aircraft determined based on the radar measurements of the reflectors (e.g., the radar-based position of the aircraft). The navigation system determines the radar-based position in such a way as to enable precision navigation and guidance of the aircraft, based on the radar-based position, to control the aircraft to approach and land in the landing zone (e.g., in an airport or vertiport, on another vehicle, or on a landing platform). The radar system repeatedly transmits radar signals and measures the ranges and directions for the reflectors in the FOV of the radar antenna, and the navigation system repeatedly determines the radar-based position based on the range and distance measurements for the reflectors. The periodicity at which the radar measurements and the position determination are performed may be small enough to ensure a certain level of precision for the position determination when controlling the aircraft to approach and land in the landing zone.

In some examples, the radar system used for the radar-based navigation may also be used for DAA (e.g., to perform DAA measurements), to perform measurements associated with determining a velocity of the aircraft, and/or to perform measurements of a local altitude of the aircraft, among other examples. In this case, the same radar hardware may be leveraged in a software defined integrated multi-purpose radar design to share the same radar hardware in order to provide the radar-based navigation and the other radar functions simultaneously or in multiplexed manner. In some examples, the radar system may support DAA (and/or other radar functions) and the radar-based navigation (e.g., radar-based position determination) simultaneously. In this case, the radar system may scan a super set of a DAA FOV (e.g., to locate in-air objects) and a radar-based navigation FOV (e.g., to locate on-the-ground objects, such as the reflectors). In some other examples, the radar system supports DAA (and/or other radar functions) and the radar-based navigation (e.g., radar-based position determination) in a multiplexed manner. For example, the radar system may alternate between supporting DAA in a first time duration (e.g., 990 ms of every 1 second) and supporting radar-based navigation in a second time duration (e.g., 10 ms of every second). In some other examples, the radar system may operate in a DAA mode before the landing acquisition starts, and the radar system may switch to a radar-based navigation mode once landing acquisition starts. In this case, landing acquisition starts, and the radar system switches to the radar-based navigation mode, at a certain distance (e.g., 2 km) from the landing zone. When landing acquisition starts, and the radar system switches to the radar-based navigation mode, the navigation system controls the aircraft to approach and land in the landing zone based on the radar-based position.

In some examples, the navigation system may rely on a different type of position determination, such as GPS-based position determination, until the aircraft reaches the distance (e.g., 2 km) from the landing zone at which landing acquisition starts, at which point the navigation system begins using the radar-based position to control the aircraft to approach and land in the landing zone. In some examples, the navigation system may use the radar-based position determination, together with another type of position determination, when controlling the aircraft to approach and land in the landing zone, for redundancy for landing the aircraft with high precision and high safety. For example, the radar-based position determination may be used together with a vision-based approach and landing system (ViTALS) during the approach and landing of the aircraft.

In some examples, in addition to or instead of controlling the aircraft to land based on the radar-based position of the aircraft, the navigation system may control the en-route navigation of the aircraft based on the radar-based position of the aircraft. For example, the navigation system may use the radar-based navigation to control the en-route navigation of the aircraft in a scenario in which GPS in unavailable or otherwise denied. In some examples, the navigation system may use the radar-based position determination for navigation correction during en-route navigation. In this case, the reflectors may be positioned to serve as fiduciary reference points for en-route navigation correction. In some examples, for a vehicle other than an aircraft (e.g., a land vehicle or a seacraft), the navigation system of the vehicle may control the vehicle to guide the vehicle to the target area based on the radar-based position of the vehicle.

In some examples, the navigation system may control the aircraft (e.g., to land and/or for en-route navigation) based on the range rate and Doppler measurements of the reflectors acquired by the radar system. In some examples, in addition to determining the position of the aircraft as described herein, the navigation system may derive or determine a velocity of the aircraft (e.g., three orthogonal velocity components) based on the range rate measurements and/or the Doppler shift measurements. The Doppler shift is directly proportional to the relative velocity along the line of sight. Consequently, in addition to the range rate measurements, the Doppler measurements provide information regarding the aircraft's relative velocity with respect to a fiducial point (e.g., a corner reflector or transponder). In some examples, the navigation system may use the range rate measurements and/or the Doppler shift measurements for ground clutter mitigation. For example, differences between the range rate and a detailed Doppler signature (e.g., the distribution of Doppler frequencies within the received radar signal) can be effectively utilized to differentiate fiducial references (e.g., the reflectors) on the ground from ground clutter. Ground clutter, particularly from rough surfaces, may generate a complex Doppler spectrum due to the presence of numerous individual scatterers, each exhibiting varying relative velocities. Radar backscattering from ground objects, such as pebbles, leaves, and other irregularities, may contribute to diffuse scattering, which increases the level of clutter in radar returns. The distinction between specular reflection from smooth surfaces and diffuse reflection from rough surfaces affects the characteristics of the received signal and the ability to extract useful information. The principle that relative motion between the aircraft and ground scatterers induces a Doppler shift, which can be used for interpreting radar returns and understanding the dynamics of the aircraft's motion relative to the ground. In some examples, by employing the complete Doppler signature, which reveals the distribution of velocities within the clutter, the navigation system can differentiate between true fiducial references on the ground (e.g., the reflectors) and the clutter generated by terrain irregularities (such as upsloping terrain). The backscattered signal from stationary fiducial references (e.g., the reflectors will exhibit a Doppler shift that accurately reflects the aircraft's motion. This capability enhances navigation precision by allowing for more accurate ground speed measurements and improved clutter rejection, thereby facilitating more reliable navigation in complex environments.

As indicated above, Figs. 1A-1G are provided as an example. Other examples may differ from what is described with regard to Figs. 1A-1G. The number and arrangement of devices shown in Figs. 1A-1G are provided as an example. In practice, there may be additional devices, fewer devices, different devices, or differently arranged devices than those shown in Figs. 1A-1G. Furthermore, two or more devices shown in Figs. 1A-1G may be implemented within a single device, or a single device shown in Figs. 1A-1G may be implemented as multiple, distributed devices. Additionally, or alternatively, a set of devices (e.g., one or more devices) shown in Figs. 1A-1G may perform one or more functions described as being performed by another set of devices shown in Figs. 1A-1G.

Fig. 2 is a diagram of an example environment 200 in which systems and/or methods described herein may be implemented. As shown in Fig. 2, environment 200 includes a vehicle 210, a radar system 220, a navigation system 230, a sensor system 240, a timing system 250, and a set of reflectors 260. Devices of environment 200 may interconnect via wired connections, wireless connections, or a combination of wired and wireless connections.

The vehicle 210 includes an aircraft, which may be any suitable vehicle and/or device capable of flight. The vehicle 210 may include, for example, an airplane (e.g., a jet airplane, a propeller airplane, a glider airplane, or the like), a helicopter, an unmanned or uncrewed aerial vehicle (UAV), a VTOL aircraft, an electric VTOL (eVTOL) aircraft, a remotely piloted aircraft, an autonomous aircraft, a drone, a rocketship, a spaceship, a space shuttle, an airship, a blimp, a balloon, or a projectile, along with other examples of aerial vehicles and/or aerial devices capable of flight. Additionally, or alternatively, the vehicle may include a land vehicle (e.g., a car, a truck, a van, a train, or a construction vehicle) and/or a watercraft.

The radar system 220 may include one or more wired or wireless devices capable of receiving, generating, storing, transmitting, processing, detecting, and/or providing information associated with radar-based navigation, as described elsewhere herein. For example, the radar system 220 may include a radar antenna, a radar sensor, a radar transmitter, a radar receiver, and/or a radar transceiver. The radar system 220 may be a frequency modulated continuous wave (FMCW) radar system or a pulse radar system. The radar system 220 may be configured to transmit radar signals, receive reflected radar signals, and measure ranges and directions for one or more reflectors 260of the set of reflectors 260, as described elsewhere herein. The radar system 220 may also be configured to perform DAA measurements, measurements associated with vehicle velocity determination, and/or measurements of a local altitude, among other examples.

The navigation system 230 includes one or more devices capable of receiving, generating, storing, transmitting, processing, and/or providing information associated with radar-based navigation, as described elsewhere herein. The navigation system 230 may include one or more devices, such as a flight management system (FMS), a flight management computer (FMC), a control display unit (CDU), and/or other devices that automate one or more of navigation, flight/trip planning, and operational tasks of the vehicle 210. The navigation system 230 may be configured to determine a position of the vehicle 210 based on range and direction measurements for one or more reflectors 260of the set of reflectors, perform integrity validation for the range and direction measurements and/or the determined position of the vehicle 210, and/or control the vehicle based on the position of the vehicle 210, as described elsewhere herein.

The sensor system 240 includes one or more devices capable of receiving, generating, storing, transmitting, processing, detecting, and/or providing information, as described elsewhere herein. The sensor system 240 may include one or more sensors, or other devices, that are configured to monitor, measure, and report information related to an operation, environment, and/or performance of the vehicle 210. For example, the sensor system 240 may include one or more sensors (e.g., inertial sensors and/or other sensors), or other devices, for detecting an airspeed, a ground speed, an altitude, an attitude, a position, a bank angle, an acceleration, one or more engine performance parameters, and/or other information associated with the vehicle 210. The sensor system 240 may be configured to sense or detect a condition or information and transmit, using a wired or wireless communication interface, an indication of the detected condition or information to the navigation system 230 (e.g., in real-time, or near-real-time).

The timing system 250 includes one or more devices capable of receiving, generating, storing, transmitting, processing, detecting, and/or providing information. The timing system 250 may perform centralized time management for the radar system 220, the navigation system 130, the sensor system 140, and/or other systems of the aircraft 210. For example, the timing system 250 may transmit or provide synchronized timing signals (e.g., reference clock signals) to the radar system 220, the navigation system 130, the sensor system 140, and/or other systems of the aircraft 210. The synchronized timing signals may be used to synchronize operations of the radar system 220, the navigation system 130, the sensor system 140, and/or other systems of the aircraft 210. For example, the timing signals may be used to coordinate radar data acquired by the radar system 220 with navigation inputs of the navigation system 230 to ensure that ensures that radar measurements can be effectively correlated with navigation data. The timing signals may ensure precise timing, which increases accuracy of the measurements performed by the radar system 220 and the sensor system 240, as well and calculations (e.g., position calculations and/or trajectory projections) performed by the navigation system 230. The timing system 250 may include an oscillator, such as a crystal oscillator, a temperature compensated crystal oscillator (TCXO), an oven controlled crystal oscillator (OCXO), a voltage controlled crystal oscillator (VCXO), or a microelectromechanical system (MEMS) oscillator, a real time clock (RTC), a ceramic resonator, or a surface acoustic wave (SAW) resonator, among other examples.

The set of reflectors 260includes one or more reflectors 260. A reflector 260may be a passive reflector (e.g., a passive corner reflector) or an active transponder (e.g., any device capable of receiving a radar signal and modifying or modulating the radar signal to transmit a modified or modulated reflected radar signal). The set of reflectors may include one or more passive reflectors, one or more active transponders, or a combination of one or more passive reflectors and one or more active transponders. In some examples, the set of reflectors 260includes multiple reflectors 260 arranged in a pattern around a target area.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with radar-based vehicle navigation. The device 300 corresponds to one or more of radar system 220, navigation system 230, sensor system 240, timing system 250, and/or reflector 260. In some examples, radar system 220, navigation system 230, sensor system 240, and/or reflector 260include one or more devices 300 and/or one or more components of the device 300. In the example shown in Fig. 3, the device 300 includes a bus 310, a processor 320, a memory 330, an input component 340, an output component 350, a communication component 360, and/or a timing component 370.

The bus 310 includes one or more components that enable wired and/or wireless communication among the components of the device 300. The bus 310 couples together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 includes a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some examples, the processor 320 includes one or more processors capable of being programmed to perform one or more operations or processes described elsewhere herein.

The memory 330 includes volatile and/or nonvolatile memory, such as random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). In some examples, the memory 330 is a non-transitory computer-readable medium. The memory 330 stores information, one or more instructions, and/or software (e.g., one or more software applications) related to the operation of the device 300. In some examples, the memory 330 includes one or more memories that are coupled (e.g., communicatively coupled) to one or more processors (e.g., processor 320), such as via the bus 310. Communicative coupling between a processor 320 and a memory 330 enables the processor 320 to read and/or process information stored in the memory 330 and/or to store information in the memory 330.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna. The timing component 370 enables localized timing control for the device 300 to manage timing of operations of the device 300 while synchronizing the timing to an overall timing framework (e.g., a reference clock). For example, the timing component 370 may include an oscillator, such as a crystal oscillator, a TCXO, an OCXO, a VCXO, or a MEMS oscillator, an RTC, a ceramic resonator, or a SAW resonator, among other examples.

In some examples, the device 300 performs one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some examples, execution of the set of instructions, by one or more processors 320, causes the one or more processors 320 and/or the device 300 to perform one or more operations or processes described herein. In some examples, hardwired circuitry is used instead of or in combination with the instructions to perform one or more operations or processes described herein. Additionally, or alternatively, the processor 320 may be configured to perform one or more operations or processes described herein. Thus, examples described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

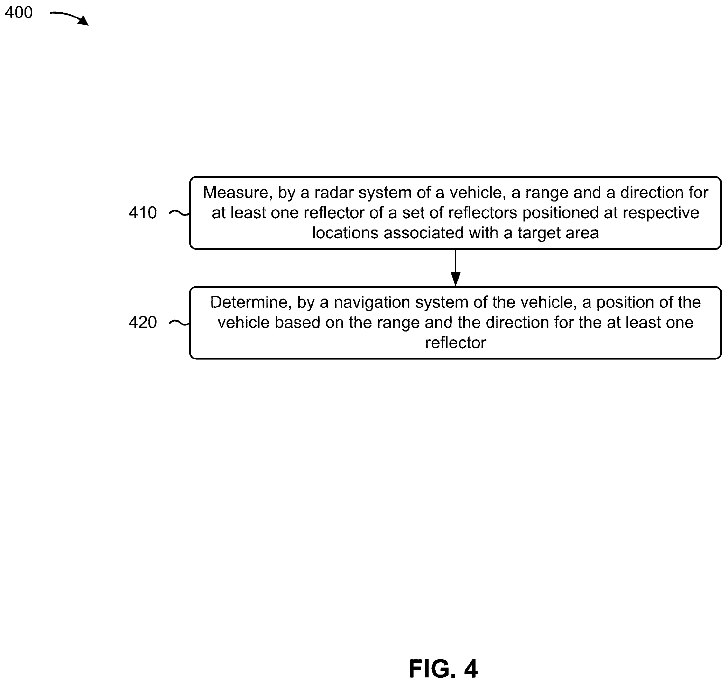

Fig. 4 is a flowchart of an example process 400 associated with radar-based vehicle navigation. One or more process blocks of Fig. 4 are performed by a radar system of a vehicle (e.g., radar system 220), by a navigation system of the vehicle (e.g., navigation system 230), and/or by another device or a group of devices separate from or including the radar system and/or the navigation system of the vehicle, such as a sensor system (e.g., sensor system 240), a timing system (e.g., timing system 250), and/or one or more reflectors (e.g., reflector 260). Additionally, or alternatively, one or more process blocks of Fig. 4 may be performed by one or more components of device 300, such as processor 320, memory 330, input component 340, output component 350, communication component 360, and/or timing component 370.

As shown in Fig. 4, process 400 includes measuring a range and a direction for at least one reflector of a set of reflectors positioned at respective locations associated with a target area (block 410). For example, the radar system of a vehicle may measure a range and a direction for at least one reflector of a set of reflectors positioned at respective locations associated with a target area, as described above.

As further shown in Fig. 4, process 400 includes determining a position of the vehicle based on the range and the direction for the at least one reflector (block 420). For example, the navigation system of a vehicle may determine a position of the vehicle based on the range and the direction for the at least one reflector, as described above.

Process 400 may include additional examples, such as any single example or any combination of examples described below and/or in connection with one or more other processes described elsewhere herein.

In a first example, the vehicle is an aircraft and the target area is a landing zone, and process 400 includes controlling the vehicle to land in the landing zone based at least in part on the position of the vehicle.

In a second example, alone or in combination with the first example, the radar system includes a radar antenna, and measuring the range and the direction for the at least one reflector includes measuring a respective range and a respective direction for each reflector, of the one or more reflectors, that is in a frame of the radar antenna.

In a third example, alone or in combination with one or more of the first and second examples, the at least one reflector includes three or more reflectors, and determining the position of the vehicle includes determining the position of the vehicle based on the ranges and the directions for the three or more reflectors without attitude information associated with the vehicle and alignment information associated with an antenna of the radar system.

In a fourth example, alone or in combination with one or more of the first through third examples, the at least one reflector includes only a single reflector, and determining the position of the vehicle includes determining the position of the vehicle based on the range and the direction for the single reflector, attitude information associated with the vehicle, and alignment information associated with an alignment of an antenna of the radar system with respect to the vehicle.

In a fifth example, alone or in combination with one or more of the first through fourth examples, the at least one reflector includes only two reflectors, and determining the position of the vehicle includes determining the position of the vehicle based on the ranges and the direction for the two reflectors, at least partial attitude information associated with the vehicle, and alignment information associated with an alignment of an antenna of the radar system with respect to the vehicle

In a sixth example, alone or in combination with one or more of the first through fifth examples, the position of the vehicle is an absolute position of the vehicle.

In a seventh example, alone or in combination with one or more of the first through fifth examples, the position of the vehicle is a relative position of the vehicle with respect to a reference point associated with the target area.

In an eighth example, alone or in combination with one or more of the first through seventh examples, the vehicle is an aircraft, and the target area is a landing zone.

In a ninth example, alone or in combination with one or more of the first through eighth examples, the one or more reflectors include a plurality of reflectors arranged in a pattern with respect to the target area.

In a tenth example, alone or in combination with one or more of the first through ninth examples, the one or more reflectors include one or more passive reflectors.

In an eleventh example, alone or in combination with one or more of the first through tenth examples, the one or more reflectors include a plurality of transponders, and each transponder, of the plurality of transponders, is configured to receive a radar signal, and transmit a reflected radar signal with a respective signature associated with that transponder.

In a twelfth example, alone or in combination with one or more of the first through eleventh examples, for each transponder, of the plurality of transponders, the respective signature includes at least one of a frequency shift, a modulation of a magnitude of the reflected radar signal, or a modulation of a phase of the reflected radar signal.

In a thirteenth example, alone or in combination with one or more of the first through twelfth examples, process 400 includes performing integrity validation for the range and the direction measured for at least one reflector, prior to determination of the position of the vehicle based on the range and the direction for the at least one reflector, wherein the integrity validation is based on at least one of a frequency, phase, and amplitude of reflected radar signals received by the radar system from the at least one reflector, or a geometry of the one or more reflectors.

In a fourteenth example, alone or in combination with one or more of the first through thirteenth examples, process 400 includes determining an estimated position of the vehicle based on inertial measurements associated with the vehicle, and validating the position of the vehicle determined based on the range and the direction for the at least one reflector based on the estimated position of the vehicle determined based on the inertial measurements.

In a fifteenth example, alone or in combination with one or more of the first through fourteenth examples, the radar system is configured to perform at least one of DAA measurements, measurements associated with vehicle velocity determination, or measurements of a local altitude.

Although Fig. 4 shows example blocks of process 400, in some examples, process 400 includes additional blocks, fewer blocks, different blocks, or differently arranged blocks than those depicted in Fig. 4. Additionally, or alternatively, two or more of the blocks of process 400 may be performed in parallel.

Further examples are set out in the following clauses.

Clause 1. A system, comprising:
one or more reflectors (260) positioned at respective locations associated with a target area; and
a vehicle (210) comprising a radar system (220) and a navigation system (230);
wherein:
   the radar system (220) is configured to measure a range and a direction for at least one reflector (260) of the one or more reflectors (260); and
   the navigation system (230) configured to determine a position of the vehicle (210) based on the range and the direction for the at least one reflector (230).

Clause 2. The system of clause 1, wherein the radar system (220) comprises a radar antenna, and wherein the radar system (220) is configured to measure a respective range and a respective direction for each reflector (260), of the one or more reflectors (260), that is in a frame of the radar antenna.

Clause 3. The system of clause 1 or 2, wherein the at least one reflector (260) includes three or more reflectors (260), and wherein the navigation system (230) is configured to determine the position of the vehicle (210) based on the ranges and the directions for the three or more reflectors (260) without attitude information associated with the vehicle (210) and alignment information associated with an antenna of the radar system (220).

Clause 4. The system of any of clauses 1 to 3, wherein the at least one reflector (260) includes only a single reflector (260), and wherein the navigation system (230) is configured to determine the position of the vehicle (210) based on the range and the direction for the single reflector (260), attitude information associated with the vehicle (210), and alignment information associated with an alignment of an antenna of the radar system (220) with respect to the vehicle (210).

Clause 5. The system of any of clauses 1 to 3, wherein the at least one reflector (260) includes only two reflectors (260), and wherein the navigation system (230) is configured to determine the position of the vehicle (210) based on the ranges and the direction for the two reflectors (260), at least partial attitude information associated with the vehicle (210), and alignment information associated with an alignment of an antenna of the radar system (220) with respect to the vehicle (210).

Clause 6. The system of any of clauses 1 to 5, wherein the position of the vehicle (210) is an absolute position of the vehicle (210).

Clause 7. The system of any of clauses 1 to 5, wherein the position of the vehicle (210) is a relative position of the vehicle (210) with respect to a reference point associated with the target area.

Clause 8. The system of any of clauses 1 to 7, wherein the vehicle (210) is an aircraft, and wherein the target area is a landing zone.

Clause 9. The system of clause 8, wherein the landing zone is at a vertiport or airport, on another vehicle, or on a landing platform.

Clause 10. The system of clause 8 or 9, wherein the navigation system (230) is configured to control the vehicle (210), based on the position of the vehicle (210), to land in the landing zone.

Clause 11. The system of any of clauses 1 to 10, wherein the one or more reflectors (260) include a plurality of reflectors (260) arranged in a pattern with respect to the target area.

Clause 12. The system of any of clauses 1 to 11, wherein the one or more reflectors (260) include one or more passive reflectors.

Clause 13. The system of any of clause 1 to 12, wherein the one or more reflectors (260) include a plurality of transponders, and wherein each transponder, of the plurality of transponders, is configured to:
receive a radar signal, and
transmit a reflected radar signal with a respective signature associated with that transponder.

Clause 14. The system of clause 13, wherein for each transponder, of the plurality of transponders, the respective signature includes at least one of:
a frequency shift,
a modulation of a magnitude of the reflected radar signal, or
a modulation of a phase of the reflected radar signal.

Clause 15. The system of any of clauses 1 to 14, wherein the navigation system (230) is configured to perform integrity validation for the range and the direction measured for the at least one reflector (260), prior to determination of the position of the vehicle (210) based on the range and the direction for the at least one reflector (260), and wherein the integrity validation is based on at least one of:
a frequency, phase, and amplitude of reflected radar signals received by the radar system (220) from the at least one reflector (260), or
a geometry of the one or more reflectors (260).

Clause 16. The system of any of clauses 1 to 15, wherein:
the vehicle (210) further comprises one or more inertial sensors configured to perform inertial measurements associated with the vehicle (210); and
the navigation system (230) is further configured to:
   determine an estimated position of the vehicle (210) based on the inertial measurements; and
   validate the position of the vehicle (210) determined based on the range and the direction for the at least one reflector (260) based on the estimated position of the vehicle (210) determined based on the inertial measurements.

Clause 17. The system of any of clauses 1 to 16, wherein the radar system (220) is further configured to perform at least one of:
detect and avoid (DAA) measurements,
measurements associated with vehicle velocity determination, or
measurements of a local altitude.

The foregoing disclosure provides illustration and description, but is not intended to be exhaustive or to limit the examples described herein to the precise forms that are described. Modifications and variations can be made in light of the above description or may be acquired from practice of the examples described herein.

As used herein, the term "component" is intended to be broadly construed as hardware, firmware, and/or a combination of hardware and software. It will be apparent that systems and/or methods described herein can be implemented in different forms of hardware, firmware, or a combination of hardware and software. The actual specialized control hardware or software code used to implement these systems and/or methods is not limiting of the examples described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or described in the specification, these combinations are not intended to limit the examples described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

## Claims

1. A system, comprising:
one or more reflectors (260) positioned at respective locations associated with a target area;
a radar system (220) of a vehicle (210), the radar system (220) configured to measure a range and a direction for at least one reflector (260) of the one or more reflectors (260); and
a navigation system (230) of the vehicle (210), the navigation system (230) configured to determine a position of the vehicle (210) based on the range and the direction for the at least one reflector (230).

2. The system of claim **1,** wherein the radar system (220) comprises a radar antenna, and wherein the radar system (220) is configured to measure a respective range and a respective direction for each reflector (260), of the one or more reflectors (260), that is in a frame of the radar antenna.

3. The system of claim 1 or 2, wherein the at least one reflector (260) includes three or more reflectors (260), and wherein the navigation system (230) is configured to determine the position of the vehicle (210) based on the ranges and the directions for the three or more reflectors (260) without attitude information associated with the vehicle (210) and alignment information associated with an antenna of the radar system (220).

4. The system of any preceding claim, wherein the at least one reflector (260) includes only a single reflector (260), and wherein the navigation system (230) is configured to determine the position of the vehicle (210) based on the range and the direction for the single reflector (260), attitude information associated with the vehicle (210), and alignment information associated with an alignment of an antenna of the radar system (220) with respect to the vehicle (210).

5. The system of any of claims 1 to 3, wherein the at least one reflector (260) includes only two reflectors (260), and wherein the navigation system (230) is configured to determine the position of the vehicle (210) based on the ranges and the direction for the two reflectors (260), at least partial attitude information associated with the vehicle (210), and alignment information associated with an alignment of an antenna of the radar system (220) with respect to the vehicle (210).

6. The system of any preceding claim, wherein:
the position of the vehicle (210) is an absolute position of the vehicle (210); or
the position of the vehicle (210) is a relative position of the vehicle (210) with respect to a reference point associated with the target area.

7. The system of any preceding claim, wherein:
the vehicle (210) is an aircraft, and wherein the target area is a landing zone; and, optionally,
the landing zone is at a vertiport or airport, on another vehicle, or on a landing platform.

8. The system of claim 7, wherein the navigation system (230) is configured to control the vehicle (210), based on the position of the vehicle (210), to land in the landing zone.

9. The system of any preceding claim, wherein the one or more reflectors (260) include:
a plurality of reflectors (260) arranged in a pattern with respect to the target area; and/or
one or more passive reflectors.

10. The system of any preceding claim, wherein the one or more reflectors (260) include a plurality of transponders, and wherein each transponder, of the plurality of transponders, is configured to:
receive a radar signal, and
transmit a reflected radar signal with a respective signature associated with that transponder; and, optionally,
wherein for each transponder, of the plurality of transponders, the respective signature includes at least one of:
a frequency shift,
a modulation of a magnitude of the reflected radar signal, or
a modulation of a phase of the reflected radar signal.

11. The system of any preceding claim, wherein the navigation system (230) is configured to perform integrity validation for the range and the direction measured for the at least one reflector (260), prior to determination of the position of the vehicle (210) based on the range and the direction for the at least one reflector (260), and wherein the integrity validation is based on at least one of:
a frequency, phase, and amplitude of reflected radar signals received by the radar system (220) from the at least one reflector (260), or
a geometry of the one or more reflectors (260).

12. The system of any preceding claim, further comprising:
one or more inertial sensors configured to perform inertial measurements associated with the vehicle (210),
wherein the navigation system (230) is further configured to:
determine an estimated position of the vehicle (210) based on the inertial measurements; and
validate the position of the vehicle (210) determined based on the range and the direction for the at least one reflector (260) based on the estimated position of the vehicle (210) determined based on the inertial measurements.

13. The system of any preceding claim, wherein the radar system (220) is further configured to perform at least one of:
detect and avoid (DAA) measurements,
measurements associated with vehicle velocity determination, or
measurements of a local altitude.

14. A method, comprising:
measuring, by a radar system (220) of a vehicle (210), a range and a direction for at least one reflector (260) of a set of reflectors (260) positioned at respective locations associated with a target area (102, 410); and
determining, by a navigation system (230) of the vehicle (210), a position of the vehicle (210) based on the range and the direction for the at least one reflector (260) (104, 420); and, optionally,
wherein the vehicle (210) is an aircraft and the target area is a landing zone, and wherein the method further comprises: controlling the vehicle (210) to land in the landing zone based at least in part on the position of the vehicle (210) (118).

15. A vehicle (210), comprising:
a radar system (220) configured to measure a range and a direction for at least one reflector (260) of a set of reflectors (260) positioned at respective locations associated with a target area; and
a navigation system (230) configured to determine a position of the vehicle (210) based on the range and the direction for the at least one reflector (260).
